# EUROPEAN PATENT APPLICATION

(11) **EP 4 318 753 A1**
(43) Date of publication of application: **07.02.2024**
(21) Application number: 21933724.3
(22) Date of filing: 31.03.2021
(51) Int. Cl.: H01M 50/204, H01M 50/244, H01M 10/613, H01M 10/6551, H01M 50/287

(54) **BATTERY MODULE AND ELECTRIC APPARATUS**

(71) Applicant: DONGGUAN POWERAMP TECHNOLOGY LIMITED, Dongguan, Guangdong 523000 (CN)
(72) Inventor: LI, Hao, Dongguan, Guangdong 523000 (CN); LI, Haoyu, Dongguan, Guangdong 523000 (CN); WANG, Pengfei, Dongguan, Guangdong 523000 (CN)
(74) Representative: Icosa
(86) International application number: PCT/CN2021/084342
(87) International publication number: WO 2022/205047

(57) **Abstract**

A battery pack includes a housing, a plurality of cells disposed in the housing, and a supporting piece. The plurality of cells are stacked in a first direction, the supporting piece is disposed between two cells, and the supporting piece includes a first supporting portion and a second supporting portion arranged opposite each other. In a second direction, the housing includes a first protrusion and a second protrusion, the supporting piece is disposed between the first protrusion and the second protrusion, the first supporting portion is connected to the first protrusion and the second supporting portion is connected to the second protrusion, and the second direction is a width direction of the housing. This application further relates to an electric apparatus. The foregoing supporting piece has a simple structure and can fix cells in the housing with fewer other components during a battery assembly process, thereby reducing the difficulty of assembling a battery pack.

## Description

### TECHNICAL FIELD

This application relates to the field of lithium battery technologies, and in particular, to a battery pack and an electric apparatus.

### BACKGROUND

During the battery assembly process, cells are often fixed in a housing using a bracket. Existing brackets for fixing cells have a complex structure and too many components, which increases the difficulty of assembling a battery. Moreover, when cells are fixed in the housing using a bracket, the cells abut against the housing, hindering assembly and heat dissipation of the cells.

### SUMMARY

In view of this, it is necessary to provide a battery template that features easy assembly and convenient heat dissipation, so as to solve the foregoing problem.

Some embodiments of this application provide a battery pack including a housing, a plurality of cells disposed in the housing, and a supporting piece. The plurality of cells are stacked in a first direction, the supporting piece is disposed between two cells, and the supporting piece includes a first supporting portion and a second supporting portion arranged opposite each other. In a second direction, the housing includes a first protrusion and a second protrusion, the supporting piece is disposed between the first protrusion and the second protrusion, the first supporting portion is connected to the first protrusion and the second supporting portion is connected to the second protrusion, and the second direction is perpendicular to the first direction.

In this solution, the supporting piece is disposed between two cells, the first supporting portion is connected to the first protrusion, and the second supporting portion is connected to the second protrusion, so that the supporting piece connects the two cells and fixes the two cells within the housing. In addition, the supporting piece has a simple structure, and cells can be fixed within the housing without the need of other components during the battery assembly, thereby reducing the difficulty of assembling the battery.

In a possible implementation, the first supporting portion includes at least two supporting blocks, where in a third direction, two supporting blocks are disposed on two opposite sides of the supporting piece respectively, a through groove is provided between two supporting blocks, and the third direction is perpendicular to both the first direction and the second direction.

In this solution, the through groove is formed between two supporting blocks, so that heat generated by the cells is discharged via the through groove, facilitating heat dissipation of the cells.

In a possible implementation, the battery pack further includes a buffer, and one side of the buffer is connected to the supporting piece and another opposite side is connected to a cell arranged adjacent to the supporting piece.

In this solution, the buffer is disposed between the supporting piece and the cell. In this way, when the cell shakes, the buffer can alleviate the impact force between the cell and the supporting piece, thereby protecting the cell against damage caused by shaking.

In a possible implementation, the cell includes a packaging case, an electrode assembly accommodated in the packaging case, and a first tab connected to the electrode assembly and extending out of the packaging case, where the first tab includes a first welding portion disposed outside the packaging case, and viewed in the first direction, the first welding portion and the first supporting portion are arranged on two opposite sides of the first protrusion.

In this solution, the first welding portion and the first supporting portion are arranged on two opposite sides of the first protrusion to form a space between the first welding portion and the first supporting portion, so that heat generated by the cells is discharged through the space, further facilitating heat dissipation of the cells.

In a possible implementation, the packaging case includes a first part and a second part arranged in sequence, where the first part is configured to accommodate the electrode assembly, the first tab led out of the packaging case through the second part, the supporting piece is provided with a through groove, and the through groove is provided between the second parts of two adjacent cells. In this solution, the through groove is provided between the second parts of two adjacent cells, so that heat generated by the cells is discharged via the through groove from the second part, further facilitating heat dissipation of the cells.

In a possible implementation, the first tab further includes a first extension disposed outside the packaging case, the first extension is disposed between the first welding portion and the second part, and viewed in the first direction, at least part of the first extension is within the through groove.

In this solution, at least part of the first extension is within the through groove, so that the first extension communicates with the through groove, helping dissipate heat generated by the cells via the through groove from the first extension.

In a possible implementation, the battery pack further includes a first circuit board, the first welding portion is disposed on the first circuit board, and viewed in the first direction, the first circuit board and the first supporting portion are arranged on two opposite sides of the first protrusion.

In this solution, the first circuit board and the first supporting portion are arranged on two opposite sides of the first protrusion. In this way, the first circuit board is separated from the cells and the supporting piece during mounting, facilitating heat dissipation of the cells. In addition, this reduces collision between the cells and the first circuit board when the cells are shaking, thereby reducing the possibility of the cells and the first circuit board being damaged during shaking.

In a possible implementation, the battery pack further includes a connecting piece, where the connecting piece includes a connecting plate, a first connecting portion, and a second connecting portion, the first connecting portion and the second connecting portion are arranged at two opposite ends of the connecting plate, and the first circuit board is disposed between the first connecting portion and the second connecting portion.

In this solution, the first circuit board is disposed between the first connecting portion and the second connecting portion, so that the first circuit board can be mounted more easily.

In a possible implementation, the connecting piece further includes a fixing portion, and the fixing portion is disposed on the connecting plate, where the fixing portion is configured to fix the first circuit board to the connecting piece.

In this solution, the fixing portion is disposed on the connecting plate and fixed to the first circuit board. In this way, the first circuit board is located between the first connecting portion and the second connecting portion, facilitating fixation of the first circuit board. In addition, the fixing portion is sleeved with a nut to fasten the first circuit board and the connecting piece, so that the torque of the rotating nut is transferred to the connecting plate, thereby preventing the first circuit board from being stressed and reducing the probability of damaging the first circuit board.

In a possible implementation, the first connecting portion is provided with a first groove, and the first groove is provided on the first protrusion.

In this solution, the first groove is provided on the first connecting portion and sleeved on the first protrusion, helping fix the connecting piece in the housing.

In a possible implementation, the second connecting portion is provided with a second groove and a third groove, the second groove and the third groove are provided on two opposite sides of the first circuit board, the second groove is provided on the second protrusion, and the third groove is configured to accommodate a connection structure disposed on the first circuit board.

In this solution, the second groove and the third groove are provided on two opposite sides of the first circuit board. In this way, when the second groove cooperates with the first groove in fixing the connecting piece in the housing, the third groove and the first groove or the second groove are located on two opposite sides of the first circuit board. This facilitates mounting of wire harnesses and avoids mutual interference of the wire harnesses in the case of excess wire harnesses.

In a possible implementation, the housing is provided with a first side wall and a second side wall arranged opposite each other in a third direction, the first protrusion and the second protrusion are disposed on the first side wall, and the third direction is perpendicular to the first direction and the second direction.

In this solution, the housing is provided with the first protrusion and the second protrusion that can cooperate with the first supporting portion and the second supporting portion, so that the supporting piece can be fixed in the housing.

An electric apparatus includes a body and the foregoing battery pack accommodated in the body.

The battery pack of this application includes a housing, a plurality of cells disposed in the housing, and a supporting piece. In this solution, the supporting piece is disposed between two cells, the first supporting portion is connected to the first protrusion, and the second supporting portion is connected to the second protrusion, so that the supporting piece connects the two cells and fixes the two cells in the housing. The supporting piece has a simple structure, and fewer other components are needed during the battery assembly process, thereby reducing the difficulty of assembling the battery. Further, a larger clearance exists between the cells and the housing, facilitating heat dissipation.

### BRIEF DESCRIPTION OF DRAWINGS

FIG. 1 is an exploded view of a battery pack according to an embodiment.
FIG. 2 is a schematic diagram of a three-dimensional structure of the housing shown in FIG. 1.
FIG. 3 is a side view of the battery pack shown in FIG. 2.
FIG. 4 is a schematic diagram of a three-dimensional structure of the cells, the supporting piece, the first circuit board, the second circuit board, and the connecting piece shown in FIG. 1.
FIG. 5 is a schematic diagram of a three-dimensional structure of a part of the cell shown in FIG. 4.
FIG. 6 is a cross-sectional view of the cells, the supporting piece, the first circuit board, the second circuit board, and the connecting piece shown in FIG. 4.
FIG. 7 is a schematic diagram of a three-dimensional structure of the supporting piece shown in FIG. 1.
FIG. 8 is a schematic diagram of a three-dimensional structure of the first circuit board and the connecting piece shown in FIG. 2.
FIG. 9 is a schematic diagram of a three-dimensional structure of the connecting piece shown in FIG. 8.

### Reference signs of main components

| | |
|---|---|
| Battery pack | 100 |
| Housing | 10 |
| First cover plate | 11 |
| First side wall | 11a |
| First fixing portion | 111 |
| Second fixing portion | 112 |
| Second cover plate | 12 |
| Second side wall | 12a |
| Third fixing portion | 121 |
| Fourth fixing portion | 122 |
| First protrusion | 13 |
| Second protrusion | 14 |
| First end plate | 15 |
| First opening | 151 |
| Second end plate | 16 |
| Second opening | 161 |
| Cell | 20 |
| Packaging case | 21 |
| First part | 211 |
| Second part | 212 |
| First tab | 23 |
| First welding portion | 231 |
| First extension | 232 |
| Second tab | 24 |
| Second welding section | 241 |
| Second extension | 242 |
| Supporting piece | 30 |
| First supporting portion | 31 |
| Supporting block | 311 |
| Through groove | 312 |
| Second supporting portion | 32 |
| Third supporting portion | 33 |
| Buffer | 40 |
| First heat sink part | 50 |
| First circuit board | 60 |
| First through hole | 61 |
| Second circuit board | 70 |
| Connecting piece | 80 |
| Connecting plate | 81 |
| First connecting portion | 82 |
| First groove | 821 |
| Second connecting portion | 83 |
| Second groove | 831 |
| Third groove | 832 |
| Fixing portion | 84 |
| Panel | 90 |
| Second heat sink part | 91 |
| Conductive copper sheet | 110 |
| First direction | A |
| Second direction | B |
| Third direction | C |

### DETAILED DESCRIPTION OF EMBODIMENTS

The following describes the technical solutions in some embodiments of this application with reference to the accompanying drawings in some embodiments of this application. Apparently, the described some embodiments are only some rather than all of embodiments of this application.

It should be noted that, when one component is deemed as being "connected to" another component, it can be directly connected to the another component, or there can be a component in between. When one component is deemed as being "disposed on" another component, it can be directly disposed on the another component, or there can be a component in between. The terms "top", "bottom", "upper", "lower", "left", "right", "front", "rear", and other similar expressions as used herein are for illustration only.

Unless otherwise defined, all technical and scientific terms used herein shall have the same meanings as commonly understood by those skilled in the art to which this application pertains. The terms used herein in the specification of this application are for description of specific some embodiments only without any intention to limit this application.

An embodiment of this application provides a battery pack including a housing, a plurality of cells disposed in the housing, and a supporting piece. The plurality of cells are stacked in a first direction, where the first direction is a length direction of the housing. The supporting piece is disposed between two cells in the first direction, and the supporting piece includes a first supporting portion and a second supporting portion arranged opposite each other. In a second direction, the housing includes a first protrusion and a second protrusion, the supporting piece is disposed between the first protrusion and the second protrusion, the first supporting portion is connected to the first protrusion and the second supporting portion is connected to the second protrusion, and the second direction is a width direction of the housing.

For the foregoing battery pack, the supporting piece is disposed between two cells, the first supporting portion is connected to the first protrusion, and the second supporting portion is connected to the second protrusion, so that the supporting piece connects the two cells and fixes the two cells within the housing. In addition, the supporting piece has a simple structure, and cells can be fixed within the housing without the need of other components during the battery assembly process, thereby reducing the difficulty of assembling the battery.

The following describes in detail some embodiments of this application with reference to the accompanying drawings. In absence of conflicts, some embodiments described below and features in these embodiments may be combined.

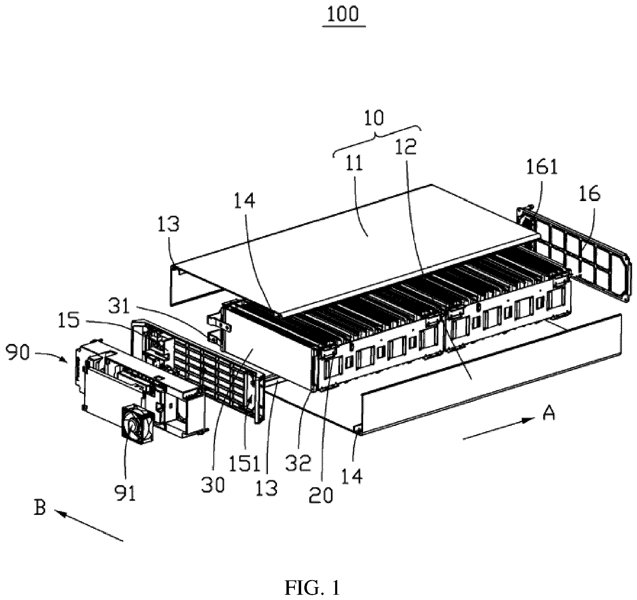

Referring to FIG. 1, an embodiment of this application provides a battery pack 100 including a housing 10, a plurality of cells 20 disposed in the housing 10, and a supporting piece 30. The plurality of cells 20 are stacked in a first direction A, the supporting piece 30 is disposed between two cells 20 in the first direction, and the supporting piece 30 includes a first supporting portion 31 and a second supporting portion 32 arranged opposite each other. In a second direction B, the housing 10 includes a first protrusion 13 and a second protrusion 14, the supporting piece 30 is disposed between the first protrusion 13 and the second protrusion 14, the first supporting portion 31 is connected to the first protrusion 13, the second supporting portion 32 is connected to the second protrusion 14, and preferably, the second direction B is perpendicular to the first direction A.

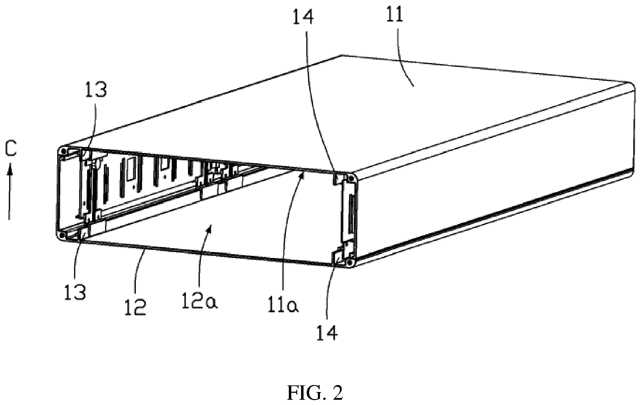

Referring to FIG. 1, FIG. 2, and FIG. 3, the housing 10 includes a first cover plate 11 and a second cover plate 12 that are detachably connected. Preferably, the first cover plate 11 is provided with a first fixing portion 111 and a second fixing portion 112, and the second cover plate 12 is provided with a third fixing portion 121 and a fourth fixing portion 122. The first fixing portion 111 may be fixed together with the third fixing portion 121, and the second fixing portion 112 may be fixed together with the fourth fixing portion 122, so as to fix or separate the first cover plate 11 and the second cover plate 12, thereby arranging the plurality of stacked cells 20 between the first cover plate 11 and the second cover plate 12.

In an embodiment, the first fixing portion 111, the second fixing portion 112, the third fixing portion 121, and the fourth fixing portion 122 are structures that may be permanently connected to each other, for example, a snap hook structure.

Further, the first cover plate 11 includes a first side wall 11a, and the second cover plate 12 includes a second side wall 12a, and in a third direction C, the first side wall 11a and the second side wall 12a are disposed on two opposite sides of the cell 20. Preferably, the third direction C is perpendicular to both the first direction A and the second direction B.

In an embodiment, the first protrusion 13 and the second protrusion 14 are disposed on the first side wall 11a. Preferably, the first protrusion 13 and the second protrusion 14 are disposed on the first side wall 11a, facing the second side wall 12a. Preferably, the first protrusion 13 is perpendicular to the first side wall 11a and the second protrusion 14 is perpendicular to the first side wall 11a. Preferably, the first protrusion 13, the second protrusion 14, and the first side wall 11a are of an integrated structure, for example, integrally formed using an injection molding process or an aluminum extrusion process. Preferably, the first protrusion 13 is detachably connected to the first side wall 11a, for example, by bolting. Preferably, the second protrusion 14 is detachably connected to the first side wall 11a, for example, by bolting. The first supporting portion 31 and the second supporting portion 32 can abut against the first protrusion 13 and the second protrusion 14 in the second direction B, restricting the movement of the cell 20 in the second direction B. Preferably, in some embodiments, when the cell 20 suffers from other external forces, the first supporting portion 31 and the second supporting portion 32 help transfer the impact force through the first protrusion 13 and the second protrusion 14 to the first side wall 11a, further protecting the cell 20.

In an embodiment, the first protrusion 13 is arranged continuously in the first direction A, and the second protrusion 14 is arranged continuously in the first direction A. The battery pack 100 includes a plurality of first supporting pieces 30, and a plurality of first supporting portions 31 and second supporting portions 32 are disposed between the first protrusion 13 and the second protrusion 14, helping further restrict the movement of the cell 20 in the second direction B. Preferably, the plurality of first supporting portions 31 and second supporting portions 32 are disposed between the first protrusion 13 and the second protrusion 14, which helps transfer impact force through the first protrusion 13 and the second protrusion 14 to the first side wall and better protect the cell 20. In other embodiments, the battery pack 100 includes a plurality of first protrusions 13 and a plurality of second protrusions 14. The first protrusions 13 are spaced apart in the first direction A and the second protrusions 14 are spaced apart in the first direction A. The battery pack 100 includes a plurality of first supporting pieces 30, and each supporting piece 30 is disposed correspondingly between one first protrusion 13 and one second protrusion 14, or a plurality of supporting pieces 30 are disposed between one first protrusion 13 and one second protrusion 14. For example, two supporting pieces 30 are disposed between one first protrusion 13 and one second protrusion 14.

In an embodiment, the battery pack 100 includes the first protrusion 13 and the second protrusion 14 disposed on the second side wall 12a. Preferably, the first protrusion 13 and the second protrusion 14 are disposed, on the second side wall 12a, facing the first side wall 11a. Preferably, the first protrusion 13 is perpendicular to the second side wall 12a, and the second protrusion 14 is perpendicular to the second side wall 12a. Preferably, the first protrusion 13, the second protrusion 14, and the second side wall 12a are of an integrated structure, for example, integrally formed using an injection molding process or an aluminum extrusion process. Preferably, the first protrusion 13 is detachably connected to the second side wall 12a, for example, by bolting. Preferably, the second protrusion 14 is detachably connected to the second side wall 12a, for example, by bolting.

In an embodiment, the first side wall 11a and the second side wall 12a each are provided with the first protrusion 13 and the second protrusion 14. In the third direction C, the first protrusion 13 disposed on the first side wall 11a and the first protrusion 13 disposed on the second side wall 12a are arranged opposite each other. Specifically, in the third direction C, an orthographic projection of the first protrusion 13 disposed on the first side wall 11a overlaps with an orthographic projection of the first protrusion 13 disposed on the second side wall 12a. The second protrusion 14 disposed on the first side wall 11a and the second protrusion 14 disposed on the second side wall 12a are arranged opposite each other. Specifically, in the third direction C, an orthographic projection of the second protrusion 14 disposed on the first side wall 11a overlaps with an orthographic projection of the second protrusion 14 disposed on the second side wall 12a. The first protrusion 13 and the second protrusion 14 arranged opposite each other help better restrict the movement of the cell 20 and help further uniformly transfer impact force through the first protrusion 13 and the second protrusion 14 to the first side wall 11a and the second side wall 12a. This further protects the cell 20.

In an embodiment, the first protrusion 13 and the second protrusion 14 are structures that can abut against the first supporting portion 31 and the second supporting portion 32, for example, sheet-like plate structures.

In the first direction A, the housing 10 is provided with a first end plate 15 and a second end plate 16 arranged opposite each other. The first cover plate 11, the second cover plate 12, the first end plate 15, and the second end plate 16 jointly enclose an accommodating space (not shown in the figure), and the cell 20 is disposed in the accommodating space. Preferably, the first end plate 15 is provided with a first opening 151 and the second end plate 16 is provided with a second opening 161, so as to form a passageway communicating with the housing 10 through the first opening 151 and the second opening 161, facilitating heat dissipation of the plurality of cells 20 inside the housing 10.

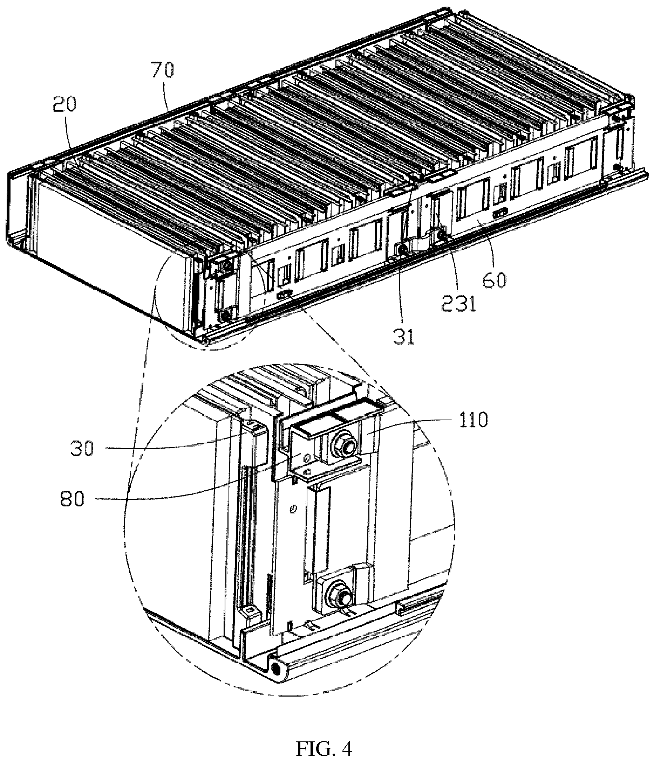

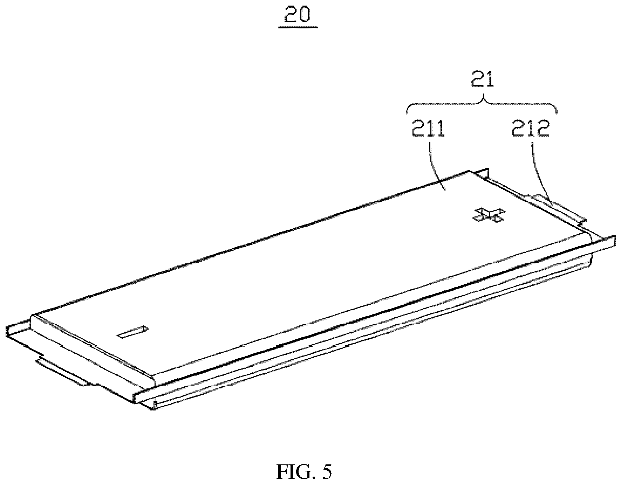

Referring to FIG. 4 and FIG. 5, the cell 20 includes a packaging case 21, an electrode assembly (not shown in the figure) accommodating in the packaging case 21, and a first tab 23 connected to the electrode assembly and led out of the packaging case 21.

Referring to FIG. 4, FIG. 5, and FIG. 6, in an embodiment, the first tab 23 leds out of the packaging case 21 from one end of the electrode assembly. Preferably, the first tab 23 includes a first welding portion 231 and a first extension 232, the first welding portion 231 and the first extension 232 are disposed outside the packaging case 21, and the first welding portion 231 is configured to connect with an adjacent tab or a conductor. Viewed in the first direction A, the first welding portion 231 and the first supporting portion 31 are arranged on two opposite sides of the first protrusion 13, so as to form a clearance between the first welding portion 231 and the first supporting portion 31. In this way, heat generated by the cells 20 is discharged through the clearance, facilitating heat dissipation of the cells 20.

The first extension 232 is disposed between the first welding portion 231 and the second part 212, and preferably viewed in the first direction A, at least part of the first extension 232 is within a through groove 312. That is, viewed in the first direction A, the second part 212 may extend out of the through groove 312 so that the entire first extension 232 is within the through groove 312, and the second part 212 may alternatively be shielded by a third supporting portion 33 so that part of the first extension 232 connected to the second part 212 is within the through groove 312. This helps discharge heat generated by the cells 20 via the through groove 312 from the first extension 232.

In another embodiment, the cell 20 further includes a second tab 24. The first tab 23 and the second tab 24 led out of the packaging case 21 from two opposite ends of the electrode assembly respectively. Preferably, the second tab 24 includes a second welding portion 241 and a second extension 242 disposed outside the packaging case 21, and the second welding portion 241 is configured to connect with an adjacent tab or a conductor. Viewed in the first direction A, the second welding portion 241 and the second supporting portion 32 are arranged on two opposite sides of the second protrusion 14, so as to form a space between the second welding portion 241 and the second supporting portion 32. In this way, heat generated by the cells 20 is discharged through the space, facilitating heat dissipation of the cells 20.

The second extension 242 is disposed between the second welding portion 241 and the second part 212, and preferably viewed in the first direction A, at least part of the second extension 242 is within the through groove 312. That is, viewed in the first direction A, the second part 212 may extend out of the through groove 312 so that the entire second extension 242 is within the through groove 312, and the second part 212 may alternatively be shielded by the third supporting portion 33 so that part of the second extension 242 connected to the second part 212 is within the through groove 312. This helps discharge heat generated by the cells 20 via the through groove 312 from the second extension 242.

In an embodiment, the first tab 23 or the second tab 24 is bent at 90°. Preferably, a bent part of the first tab 23 is the foregoing first welding portion 231, a bent part of the second tab 24 is the foregoing second welding portion 241. By means of bending, length of the first tab 23 or the second tab 24 out of the packaging case 21 is reduced, so as to reduce an extent of a shaking battery pack 100 pulling the tabs and prevent the first welding portion 231 or the second welding portion 241 from detaching from a welding area.

Further, the packaging case 21 includes a first part 211 and a second part 212 arranged in sequence. The second part 212 is arranged at two opposite ends of the first part 211. Preferably, the first part 211 is a convex structure with a specified accommodating space (not shown in the figure), formed by the packaging case 21, so as to accommodate the electrode assembly in the accommodating space. The second part 212 is a flat structure formed by extending from the periphery of the first part 211, and the second part 212 is configured to seal the cell 20. The first tab 23 and the second tab 24 are connected to the electrode assembly at one end and led out of the packaging case 21 from the second part 212 at another end. In other embodiments, the first tab 23 and the second tab 24 are disposed at the same end of the cell 20, and the first tab 23 and the second tab 24 extend out of the first part 211 from the same second part 212.

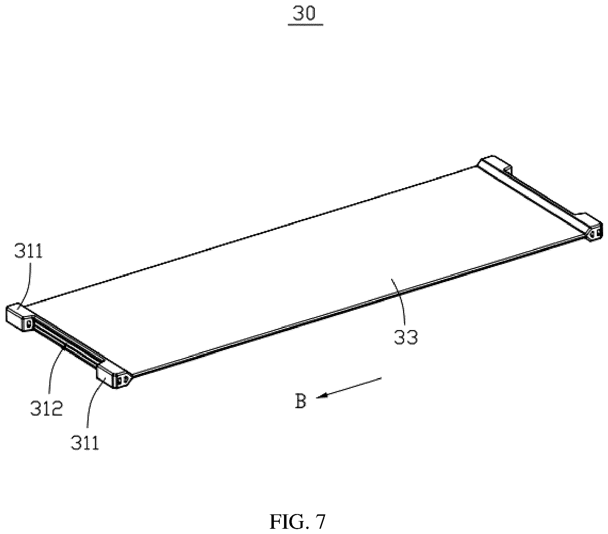

Referring to FIG. 7, the first supporting portion 31 and the second supporting portion 32 each include two supporting blocks 311. In the third direction C, the two supporting blocks 311 are disposed on opposite edges of the supporting piece 30 respectively, and a through groove 312 is disposed between the two supporting blocks 311. Preferably, the through groove 312 is disposed between the second parts 212 of two adjacent cells 20. In this way, when the cells 20 generate heat, the heat inside the cells 20 can be discharged via the through groove 312 from the second parts 212. Preferably, viewed in the first direction, part of the first extension 232 is within the through groove 312, which facilitates heat dissipation of the first extension 232. Preferably, viewed in the first direction, part of the second extension 242 is within the through groove 312, which facilitates heat dissipation of the second extension 242.

The supporting piece 30 further includes a third supporting portion 33. The first supporting portion 31 and the second supporting portion 32 are arranged at two opposite ends of the third supporting portion 33. Preferably, the cell 20 is disposed on a side surface, of the third supporting portion 33, facing the cell 20 by using a binder, for example, a double-sided tape or other adhesive materials.

In an embodiment, the supporting piece 30 is a flat plate structure, which supports the cell 20 while abutting against the first protrusion 13 and the second protrusion 14, thereby fastening the cell 20 to the housing 10. It can be understood that a type of the supporting piece 30 is not limited hereto. For example, in another embodiment, the supporting piece 30 may alternatively be a mounting base structure or the like.

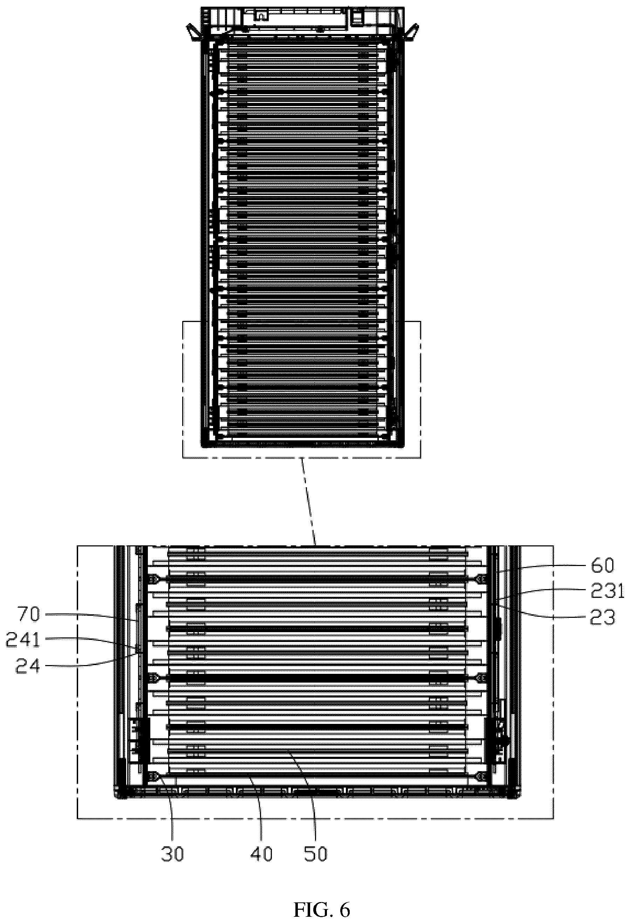

Still referring to FIG. 6, the battery pack 100 further includes a buffer 40. In an embodiment, the buffer 40 is disposed between the supporting piece 30 and the cell 20. One side of the buffer 40 is connected to the supporting piece 30, and the opposite another side is connected to the cell 20 arranged adjacent to the supporting piece 30. Preferably, the buffer 40 is bonded to the third supporting portion 33, and the buffer 40 alleviate the impact force of the supporting piece 30 on the cell 20, so as to reduce the possibility of the cell 20 being damaged.

In another embodiment, the buffer 40 may alternatively be disposed between two cells 20, and the two opposite sides of the buffer 40 are connected to the two cells 20 respectively to prevent the two cells 20 from colliding with each other due to shaking. Preferably, the buffer 40 and the cell 20 are connected by using a binder such as a double-sided tape.

In an embodiment, the buffer 40 includes, but is not limited to, foam, and preferably, the buffer 40 has a buffering function.

The battery pack 100 further includes a first heat sink part 50. In an embodiment, the first heat sink part 50 is disposed between two cells 20, and the first heat sink part 50 and the buffer 40 are spaced apart. That is, the first heat sink part 50 and the buffer 40 are connected by way of the cell 20, so that heat generated by the cells 20 is discharged by the first heat sink part 50.

It can be understood that in another embodiment, the first heat sink part 50 may alternatively be disposed between the cell 20 and the supporting piece 30.

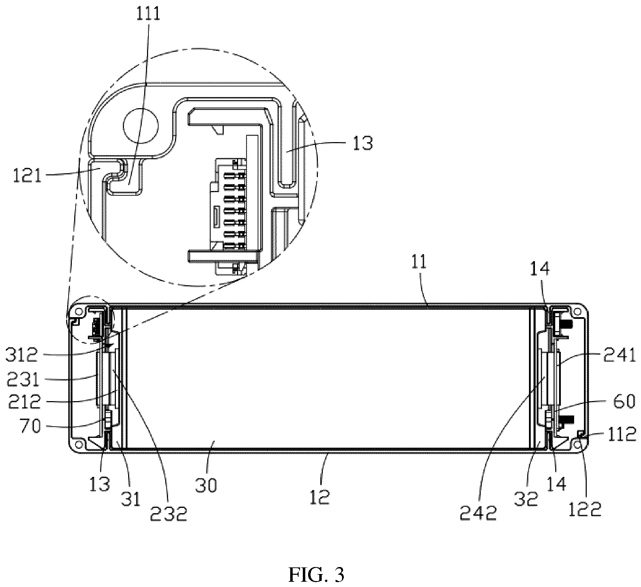

In an embodiment, the first heat sink part 50 includes, but is not limited to, a hollow aluminum sheet structure. Referring to FIG. 3 and FIG. 6, in an embodiment, the battery pack 100 further includes a first circuit board 60, and the first welding portion 231 is disposed on the first circuit board 60. Viewed in the first direction A, the first circuit board 60 and the first supporting portion 31 are arranged on two opposite sides of the first protrusion 13, so as to form a clearance among the first circuit board 60, the cell 20, and the supporting piece 30 for better heat dissipation.

Further, the first circuit board 60 is provided with a first through hole 61. The first tab 23 extends out of the first through hole 61, and the first welding portion 231 is welded onto a copper plate (not shown in the figure) on an outer side of the first circuit board 60.

In another embodiment, the battery pack 100 further includes a second circuit board 70. The first circuit board 60 and the second circuit board 70 are arranged at two opposite ends of the cell 20, and the second welding portion 241 is disposed on the second circuit board 70. Viewed in the first direction A, the second circuit board 70 and the second supporting portion 32 are arranged on two opposite sides of the second protrusion 14, so as to form a clearance among the second circuit board 70, the cell 20, and the supporting piece 30 for better heat dissipation.

Further, the second circuit board 70 is provided with a second through hole (not shown in the figure). The second tab 24 extends out of the second through hole, and the second welding portion 241 is welded onto a copper plate (not shown in the figure) on an outer side of the second circuit board 70.

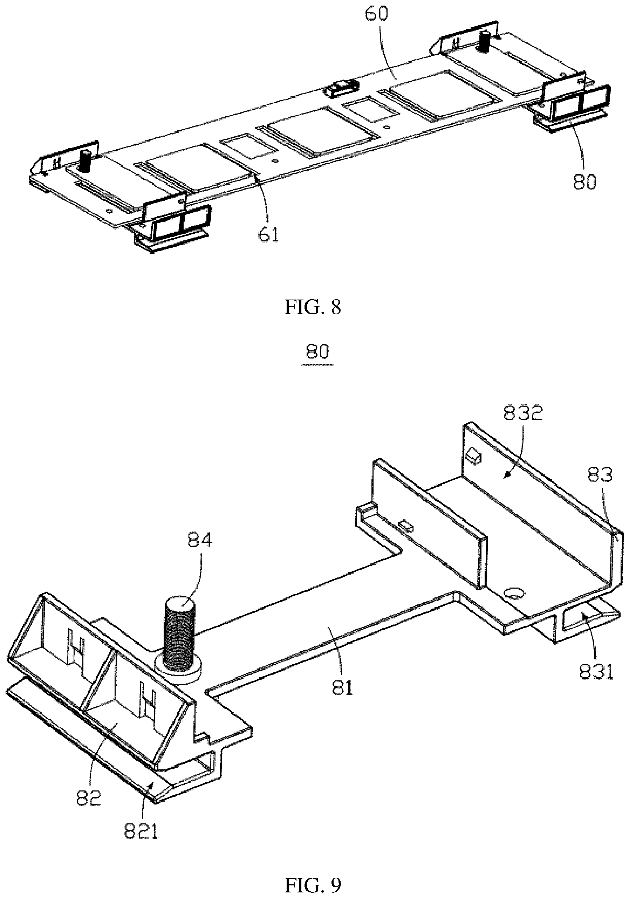

Referring to FIG. 8 and FIG. 9, the battery pack 100 further includes a connecting piece 80. The connecting piece 80 includes a connecting plate 81, a first connecting portion 82, and a second connecting portion 83. The first connecting portion 82 and the second connecting portion 83 are arranged at two opposite ends of the connecting plate 81, and the first circuit board 60 is disposed between the first connecting portion 82 and the second connecting portion 83, so that the first circuit board 60 can be fixed in the housing 10 by using the first connecting portion 82 and the second connecting portion 83.

Further, the first connecting portion 82 is provided with a first groove 821, and the first groove 821 may be sleeved on the first protrusion 13, so as to fasten the first connecting portion 82 to the housing 10 with respect to the first protrusion 13.

Further, the second connecting portion 83 is provided with a second groove 831 arranged opposite the first groove 821, and the second groove 831 may be sleeved on the second protrusion 14, so as to cooperate with the first groove 821 to fix the connecting piece 80 in the housing 10.

The second connecting portion 83 is further provided with a third groove 832. The second groove 831 and the third groove 832 are arranged on two opposite sides of the first circuit board 60. That is, the first groove 821 and the second groove 831 are disposed on an inner side of the first circuit board 60, and the third groove 832 is disposed on an outer side of the first circuit board 60. When the first groove 821 and the second groove 831 are configured to fix the first circuit board 60 in the housing 10, the third groove 832 extends out of the first circuit board 60. The battery pack 100 further includes a connection structure disposed on the first circuit board 60. At least part of the connection structure is within the third groove 832, This helps restrict positions of the connection structure, facilitates assembly and fixation, and reduces the interference between the connection structure and other structural members. Preferably, the connection structure includes a wire harness. Preferably, the connection structure includes a conductive copper sheet 110.

The connecting piece 80 further includes a fixing portion 84. The fixing portion 84 is disposed on the connecting plate 81 and may be fastened to the first circuit board 60. When the first circuit board 60 is being fixed between the first connecting portion 82 and the second connecting portion 83, the fixing portion 84 extends out of a hole on the first circuit board 60 and is fixed to the first circuit board 60, so as to increase the reliability of fixing the first circuit board 60 between the first connecting portion 82 and the second connecting portion 83. Preferably, the connection structure includes a conductive copper sheet 110, and the conductive copper sheet 110 is provided with a hole. The fixing portion 84 is led through the holes on the first circuit board 60 and the conductive copper sheet 110 and fixes the connecting piece 80, the first circuit board 60, and the conductive copper sheet 110, which saves space.

In an embodiment, the fixing portion 84 is a screw. The fixing portion 84 is led through the holes on the first circuit board 60 and is fastened by a nut (not shown in the figure). When the first circuit board 60 is fixed between the first connecting portion 82 and the second connecting portion 83 by the nut, the nut is rotated on the fixing portion 84 so that the first circuit board 60 is secured tight by the nut. The torque generated by rotating the nut is transferred to the connecting plate 81, thereby mitigating interference with the first circuit board 60 by the torque generated during rotation of the nut. It can be understood that a type of the fixing portion 84 is not limited hereto and may be any structure that can be fastened to the connecting plate 81 and can fix the first circuit board 60 between the first connecting portion 82 and the second connecting portion 83.

Still referring to FIG. 1, the battery pack 100 further includes a panel 90 and a second heat sink part 91 disposed on the panel 90. In the first direction A, the panel 90 is disposed at an end of the housing 10 where the first end plate 15 is provided. The second heat sink part 91 is disposed back away from the first opening 151, so that heat generated by the cells 20 is discharged from the housing 10 by the second heat sink part 91 through the first opening 151.

In an embodiment, the second heat sink part 91 includes, but is not limited to, a fan, and may be any structure that can discharge the heat generated by the cells 20 through the first opening 151.

Another embodiment of this application further provides an electric apparatus (not shown in the figure), including a body (not shown in the figure) and the battery pack 100 accommodated in the body, where the battery pack 100 is the battery pack 100 described in the foregoing embodiment. Therefore, the electric apparatus has all the beneficial effects of the battery pack 100, which is not repeated herein. Further, the electric apparatus may be an electric vehicle, an electric bus, an electric car, or the like, and the body is a vehicle structure. The battery pack 100 200 is provided in the vehicle to supply power. It can be understood that in other embodiments, the electric apparatus may also be an energy storage device, an electric bicycle, a flying device, a hand-held electric apparatus, and other apparatuses such as a vacuum cleaner and a lawn mower.

In addition, those of ordinary skill in the art should be aware of that the foregoing some embodiments are only intended to describe this application, but not to limit this application. Appropriate modifications and variations made to the foregoing some embodiments without departing from the essential spirit and scope of this application all fall within the scope of this application.

## Claims

1. A battery pack, comprising: a housing; a plurality of cells arranged in the housing, the plurality of the cells being stacked in a first direction;
a supporting piece disposed between two cells , the supporting piece comprises a first supporting portion and a second supporting portion arranged opposite to each other; and
in a second direction, the housing comprises a first protrusion and a second protrusion, the supporting piece is disposed between the first protrusion and the second protrusion, the first supporting portion is connected to the first protrusion, the second supporting portion is connected to the second protrusion, and the second direction is perpendicular to the first direction.

2. The battery pack according to claim 1, wherein the first supporting portion comprises at least two supporting blocks; wherein in a third direction, two supporting blocks are disposed on two opposite sides of the supporting piece respectively;
a through groove is provided between the two supporting blocks, and the third direction is perpendicular to both the first direction and the second direction.

3. The battery pack according to claim 1, wherein the battery pack further comprises a buffer, and one side of the buffer is connected to the supporting piece and another opposite side is connected to a cell arranged adjacent to the supporting piece.

4. The battery pack according to claim 1, wherein the cell comprises a packaging case, an electrode assembly accommodated in the packaging case, and a first tab connected to the electrode assembly; the tab extends out of the packaging case;
the first tab comprises a first welding portion disposed outside the packaging case; and viewed in the first direction, the first welding portion and the first supporting portion are arranged on two opposite sides of the first protrusion.

5. The battery pack according to claim 4, wherein the packaging case comprises a first part and a second part arranged in sequence, wherein the first part is configured to accommodate the electrode assembly, the first tab extends out of the packaging case through the second part;
the supporting piece is provided with a through groove, and the through groove is provided between the second parts of two adjacent cells.

6. The battery pack according to claim 5, wherein the first tab further comprises a first extension disposed outside the packaging case, the first extension is disposed between the first welding portion and the second part;
and viewed in the first direction, at least a part of the first extension is within the through groove.

7. The battery pack according to claim 4, wherein the battery pack further comprises a first circuit board, the first welding portion is disposed on the first circuit board;
viewed in the first direction, the first circuit board and the first supporting portion are arranged on two opposite sides of the first protrusion.

8. The battery pack according to claim 7, wherein the battery pack further comprises a connecting piece; wherein
the connecting piece comprises a connecting plate, a first connecting portion, and a second connecting portion; the first connecting portion and the second connecting portion are arranged at two opposite ends of the connecting plate, and the first circuit board is disposed between the first connecting portion and the second connecting portion.

9. The battery pack according to claim 8, wherein the connecting piece further comprises a fixing portion, and the fixing portion is disposed on the connecting plate, wherein the fixing portion) is configured to fix the first circuit board to the connecting piece.

10. The battery pack according to claim 8, wherein the first connecting portion is provided with a first groove, and the first groove is provided on the first protrusion.

11. The battery pack according to claim 10, wherein the second connecting portion is provided with a second groove and a third groove, the second groove and the third groove are provided on two opposite sides of the first circuit board, the second groove is provided on the second protrusion;, and the third groove is used to accommodate a connection structure disposed on the first circuit board.

12. The battery pack according to claim 1, wherein the housing is provided with a first side wall and a second side wall arranged opposite to each other in a third direction; the first protrusion and the second protrusion are disposed on the first side wall; and the third direction is perpendicular to the first direction and the second direction.

13. An electric apparatus, comprising a body; and the battery pack according to any one of claims 1 to 12; the battery pack is accommodated in the body.
